Europäisches Patentamt

**European Patent Office**

Office européen des brevets

(19)

(11) **EP 0 837 536 B1**

(12) **EUROPÄISCHE PATENTSCHRIFT**

(45) Veröffentlichungstag und Bekanntmachung des Hinweises auf die Patenterteilung:
**24.09.2003  Patentblatt 2003/39**

(51) Int Cl.$^7$: **H02H 7/085**, H02H 6/00

(21) Anmeldenummer: **97117980.9**

(22) Anmeldetag: **16.10.1997**

(54) **Antriebseinrichtung für längsgeführte hin und her bewegbare Massen**

Drive assembly for axially reciprocating masses

Dispositif d'entraînement pour masses à mouvement aller et retour, guidé longitudinalement

(84) Benannte Vertragsstaaten:
**AT BE CH DE DK FR GB IT LI NL SE**

(30) Priorität: **17.10.1996  DE 19642928**

(43) Veröffentlichungstag der Anmeldung:
**22.04.1998   Patentblatt 1998/17**

(73) Patentinhaber: **SIEMENS AKTIENGESELLSCHAFT**
**80333 München (DE)**

(72) Erfinder:
 • **Sonntag, Guido, Dipl.-Ing.**
  **30989 Gehrden (DE)**

 • **Nolte, Uwe, Dipl.-Ing.**
  **30890 Barsinghausen (DE)**

(56) Entgegenhaltungen:
  DE-A- 3 136 746      DE-A- 4 107 207
  DE-A- 4 216 040      US-A- 4 529 920

 • **DATABASE IEL (ELECTRONIC LIBRARY) [Online] IEEE TENCON '91.1991 IEEE, vol 1, ISBN 078005388, 30. August 1991 (1991-08-30) CHANDRA H.: "Microprocessor based thermal model approach for protection and optimum utilisation of power thyristors transformers and drives" XP002104932**

**Beschreibung**

Die Erfindung bezieht sich auf eine Antriebseinrichtung für längsgeführt hin und her bewegbare Massen, mit einem Motor, mittels dem die Antriebsenergie für die bewegbare Masse erzeugbar ist, einer Übertragungseinrichtung, mittels der die vom Motor erzeugte Antriebsenergie auf die hin und her bewegbare Masse übertragbar ist, und einer Steuereinrichtung, mittels der der Motor so steuerbar ist, daß er entsprechend einem vorgebbaren Bewegungsablauf der bewegbaren Masse Antriebsenergie erzeugt. Durch das us-amerikanische Patent US 4 529 920 ist eine Antriebsvorrichtung, die die Merkmale des Oberbegriffs des Anspruchs 1 aufweist, bekannt geworden.

Im Betrieb von derartige hin und her zu bewegende Massen aufweisenden technischen Anlagen können Situationen auftreten, bei denen eine hin und her bewegbare Masse in einem vergleichsweise kurzen Zeitraum häufig verstellt wird. Dies hat zur Folge, daß die zur Bewegung der Massen eingesetzten Motoren so ausgelegt werden, daß derartige Situationen berücksichtigt sind, was dazu führt, daß die insgesamt installierte Motorleistung die über einen langen Zeitraum tatsächlich erforderliche Leistung u.U. beträchtlich übersteigt, was mit entsprechenden Nachteilen hinsichtlich des Herstellungs- und Kostenaufwands verbunden ist.

Der Erfindung liegt die Aufgabe zugrunde, eine Antriebseinrichtung für längsgeführt hin und her bewegbare Massen zur Verfügung zu stellen, bei der das Leistungsniveau des die Antriebsenergie für die bewegbare Masse erzeugenden Motors im Vergleich zum Stand der Technik erheblich kleiner sein kann.

Diese Aufgabe wird erfindungsgemäß dadurch gelöst, daß die Steuereinrichtung der Antriebseinrichtung den vorgebbaren Bewegungsablauf der bewegbaren Masse entsprechend unterschiedlichen Betriebszuständen des Motors verändern kann. Hierdurch ist ein sicherer Betrieb des Motors innerhalb eines für ihn vorgesehenen Betriebszustandsbereichs möglich. Wenn im Betrieb der die bewegbaren Massen aufweisenden Anlage ein und dieselbe bewegbare Masse in einem vergleichsweise kurzen Zeitraum sehr häufig zu bewegen ist, kann der Bewegungsablauf der bewegbaren Masse so verändert werden, daß der Betriebszustand des Motors unterhalb kritischer Grenzen verbleibt.

Zweckmäßigerweise kann die Steuereinrichtung eine Subeinheit aufweisen, in der die Daten erfaßt werden und diejenigen Vorgänge ablaufen, mittels denen der vorgebbare Bewegungsablauf der bewegbaren Masse entsprechend den unterschiedlichen Betriebszuständen des Motors verändert wird.

Als besonders vorteilhaft hat es sich erwiesen, wenn die Steuereinheit bzw. die Subeinheit die Motortemperatur als den Betriebszustand des Motors kennzeichnenden Parameter erfaßt. Die Motortemperatur bietet sich deshalb an, da Motoren jedweder Bauart einen Betriebsbereich aufweisen, der nach oben durch eine zulässige Höchsttemperatur begrenzt ist. Durch Erfassung der Motortemperatur kann somit überwacht werden, ob sich der Motor dieser maximal zulässigen Temperatur nähert oder diese überschreitet.

Sofern erfaßt wird, daß die Motortemperatur die maximal zulässige Betriebstemperatur erreicht bzw. übersteigt, kann dann mittels der Steuereinheit bzw. der Subeinheit der vorgebbare Bewegungsablauf der bewegbaren Masse so verändert werden, daß die Motortemperatur wieder in den zulässigen Betriebsbereich unterhalb der zulässigen Höchst- bzw. Grenztemperatur abfällt.

Als Motoren für Antriebseinrichtungen für hin und her bewegbare Massen haben sich Elektromotoren als besonders vorteilhaft erwiesen.

Eine in vergleichsweise einfacher Weise durchführbare Anpassung des Bewegungsablaufs der hin und her bewegbaren Masse an einen Betriebszustand des Motors kann erreicht werden, wenn bei einer Veränderung des vorgebbaren Bewegungsablaufs eine Stillstandzeit und/oder eine Bewegungsrichtungsumkehrzeit und/oder eine Beschleunigungsphase und/oder eine Endgeschwindigkeit und/oder eine Schleichgeschwindigkeitsstrecke des Bewegungsablaufs der hin und her bewegbaren Masse variiert wird bzw. werden.

Es ist möglich, zur Erfassung der Motortemperatur im Motor selbst einen Temperaturfühler vorzusehen.

Alternativ kann das Temperaturverhalten des Motors in der Steuereinrichtung nachgebildet werden.

Zur Überwachung der aktuellen Motortemperatur kann beispielsweise das Temperaturverhalten des Motors softwaremäßig nachgebildet werden. Näherungsweise zeigt das Temperaturverhalten des Motors Tiefpaß-Verhalten. In dieser Ausführungsform der erfindungsgemäßen Antriebseinrichtung weist deren Steuereinrichtung einen Stromfühler zur Erfassung des variablen Eingangsstroms des Motors und einen Temperaturfühler zur Erfassung der variablen Umgebungstemperatur des Motors auf und wird die aktuelle Motortemperatur aufgrund des variablen Eingangsstroms des Motors, der variablen Umgebungstemperatur des Motors, des konstanten Innenwiderstands des Motors, der thermischen Zeitkonstante des Motors und des konstanten thermischen Wicklungswiderstands des Motors ermittelt. Hierdurch läßt sich ein sicherer Betrieb des Motors unterhalb der für ihn feststehenden Grenztemperatur erzielen.

Auf einen Temperaturfühler zur Erfassung der variablen Umgebungstemperatur des Motors kann verzichtet werden, wenn bei dem vorstehend geschilderten Ermittlungsverfahren anstelle der variablen Umgebungstemperatur des Motors eine maximal mögliche Umgebungstemperatur des Motors zugrundegelegt wird, da in diesem Fall die ermittelte Motortemperatur in jedem Fall größer oder gleich der tatsächlichen Motortemperatur ist, so daß die auch für dieses Verfahren vorgegebene maximal zulässige Grenztemperatur des Motors keinesfalls überschritten wird.

Um einen weiteren Sicherheitsfaktor bei der Ermittlung der Motortemperatur gemäß dem vorstehend geschilderten Verfahren zu schaffen, ist es vorteilhaft, wenn in der Steuereinrichtung eine maximale und eine minimale thermische Zeitkonstante des Motors registriert sind, wobei die maximale bei Erwärmungs- und die minimale thermische Zeitkonstante bei Abkühlungsphasen des Motors der Ermittlung der aktuellen Motortemperatur zugrundegelegt wird.

Mit weniger Aufwand und dennoch mit ausreichender Zuverlässigkeit läßt sich die Motortemperatur nachbilden, wenn die Steuereinrichtung der erfindungsgemäßen Antriebseinrichtung eine Zähleinrichtung zur Erfassung eines Zählwerts aufweist, der ansteigt, wenn die hin und her bewegbare Masse bewegt wird, und absinkt, wenn die hin und her bewegbare Masse stillsteht, wobei die Steuereinrichtung den vorgebbaren Bewegungsablauf der bewegbaren Masse verändert, wenn der Zählwert einen der Grenztemperatur des Motors entsprechenden Schwellenwert übersteigt.

In einer vorteilhaften Ausführungsform weist die Zähleinrichtung einen Reversierzyklenzähler auf, der bei einer Bewegung der bewegbaren Masse aus deren Stillstand inkrementiert und bei einer Reversierung der Bewegung der bewegbaren Masse um zwei Impulse erhöht wird.

Eine Dekrementierung des Reversierzyklenzählers kann entsprechend dem Betriebsablauf bzw. dem Bewegungsablauf der hin und her bewegbaren Masse erfolgen, wenn der Motor der Antriebseinrichtung während Stillstandzeiten der bewegbaren Masse stillsteht, wobei vorteilhaft dann die Zähleinrichtung einen Stillstandzeitensummierer aufweist, der bei Stillstandzeiten der bewegbaren Masse je Zeitintervall, vorzugsweise je 10 ms, inkrementiert wird, wobei der Reversierzyklenzähler dann dekrementiert wird, wenn der Stillstandzeitensummierer einen vorgegebenen Zeitraum, vorzugsweise 2 s, aufsummiert hat. Hierdurch läßt sich die Motortemperatur mit der ausreichenden Genauigkeit nachbilden, so daß in jedem Fall ein Überschreiten der maximal zulässigen Grenztemperatur des Motors verhindert werden kann.

Die Anpassung der Motorlast an dessen Betriebszustand bzw. an dessen Betriebstemperatur kann erfolgen, indem die Steuereinrichtung der Antriebseinrichtung den vorgebbaren Bewegungsablauf der bewegbaren Masse verändert, vorzugsweise eine beim Bewegungsablauf auftretende Stillstandzeit um ein erstes Zeitintervall verlängert, wenn der Reversierzyklenzähler einen ersten Schwellenwert übersteigt.

Eine Verlängerung der Stillstandzeit um ein zweites Zeitintervall kann vorgenommen werden, wenn der Reversierzyklenzähler einen zweiten Schwellenwert übersteigt. Wenn der zweite Schwellenwert höher als der erste Schwellenwert liegt, ist das zweite Zeitintervall, um das sich die Stillstandzeit im Vergleich zu der normalen Stillstandzeit erhöht, größer als das erste Zeitintervall.

Um sicherzugehen, daß bei einer Einschaltung der Antriebseinrichtung eine etwaige thermische Vorbelastung des Motors berücksichtigt wird, wird der Reversierzyklenzähler bei einer Einschaltung der Antriebseinrichtung auf einen Grundvorgabewert eingestellt.

Im folgenden wird die Erfindung an Hand von Ausführungsformen unter Bezugnahme auf die Zeichnung näher erläutert. Es zeigen:

FIG 1    in prinzipieller Darstellung eine erste Ausführrungsform der erfindungsgemäßen Antriebseinrichtung und

FIG 2    in prinzipieller Darstellung eine zweite Ausführrungsform der erfindungsgemäßen Antriebseinrichtung.

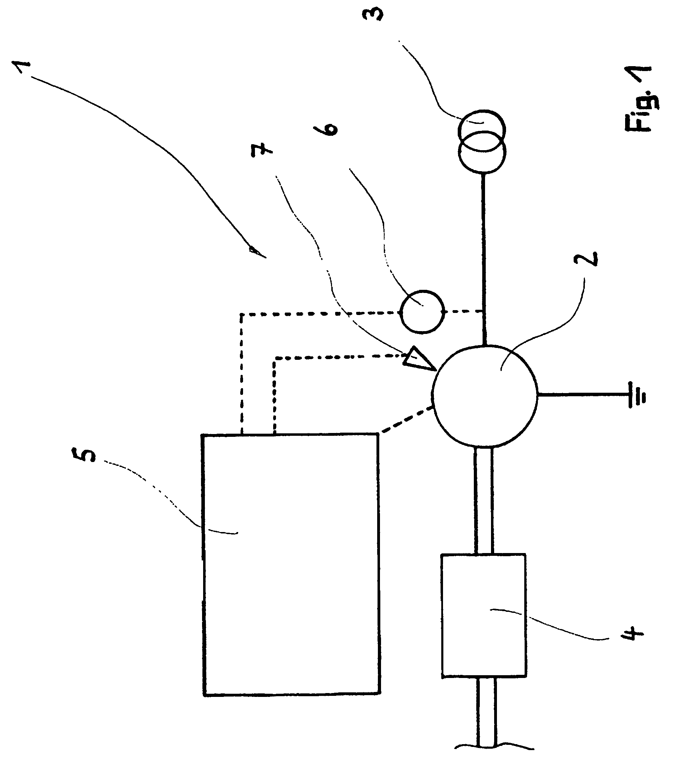

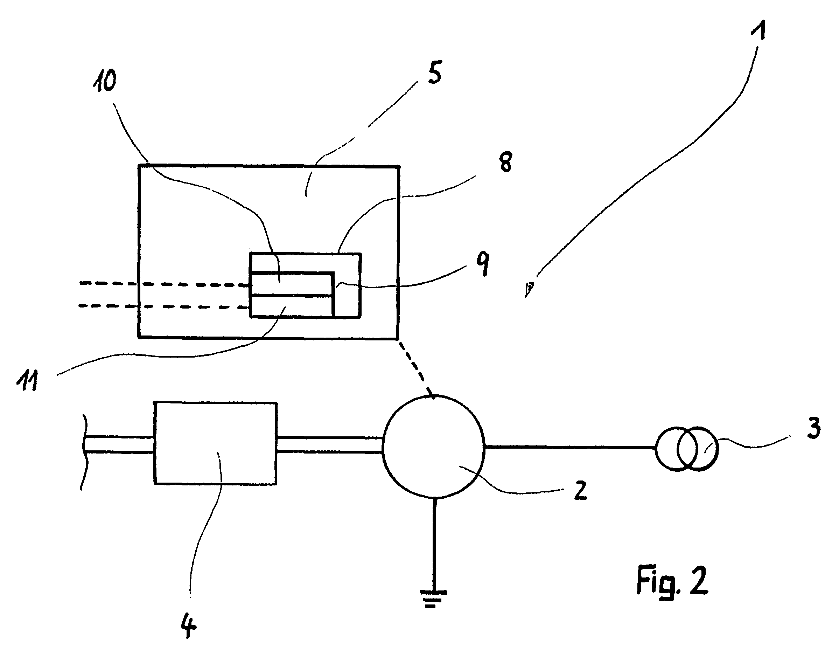

Eine in den FIG 1 und 2 prinzipiell dargestellte erfindungsgemäße Antriebseinrichtung 1 hat einen Motor bzw. Elektromotor 2, der über eine Stromquelle 3 mit elektrischer Leistung versorgt wird.

Der Elektromotor 2 ist ausgangsseitig an eine geeignete Übertragungseinrichtung 4 angeschlossen, mittels der die durch den Elektromotor 2 erzeugte Antriebsenergie auf die in den FIG 1 und 2 nicht dargestellten, längsgeführt hin und her bewegbaren Massen übertragbar ist.

Bei den hin und her bewegbaren Massen kann es sich um motorisch bewegbare Türen, insbesondere Schiebetüren, wie Aufzugstüren oder dergleichen, handeln. Die Massen können jedoch auch Sicherheitsschotte oder dergleichen sein, welche im Normalfall maschinell geschlossen und geöffnet werden.

Die Antriebseinrichtung 1 weist desweiteren eine Steuereinrichtung 5 auf, die bei der in FIG 1 dargestellten Ausführungsform der erfindungsgemäßen Antriebseinrichtung eingangsseitig an einen Stromfühler 6 angeschlossen ist, mittels dem der Betriebsstrom des Elektromotors 2 erfaßt wird. In die Steuereinrichtung 5 wird somit ein den jeweils aktuellen Betriebsstrom des Elektromotors 2 kennzeichnendes Signal eingegeben.

Desweiteren ist die Steuereinrichtung 5 eingangsseitig an einen Temperaturfühler 7 angeschlossen, der nahe dem Elektromotor 2 in dessen Umgebung angeordnet ist.

Zur Vermeidung einer die zulässige Grenztemperatur des Elektromotors übersteigenden Temperatur in der Motorwicklung wird das Temperaturverhalten des Elektromotors 2 innerhalb der Steuereinrichtung 5 softwaremäßig nachgebildet. Näherungsweise weist das Temperaturverhalten des Elektromotors 2 Tiefpaß-Verhalten auf.

Als Eingangsgröße für die Ermittlung der Motortemperatur werden die momentane Verlustleistung des Elektromotors 2 und den konstanten thermischen Wicklungswiderstand des Motors betreffende Angaben benötigt.

Hierbei wird davon ausgegangen, daß, wie bereits erwähnt, der thermische Wicklungswiderstand des Elektromotors 2 konstant und damit unabhängig vom Einbauort ist, wobei davon ausgegangen wird, daß eine Kühlung des Elektromotors 2 ausschließlich über Wärmeabstrahlung bzw. Konvektion erfolgt.

Der Temperaturfühler 7 zur Erfassung der variablen Umgebungstemperatur des Elektromotors 2 ist, wie bereits erwähnt, in unmittelbarer räumlicher Nähe zum Elektromotor 2 angeordnet.

An dieser Stelle sei darauf hingewiesen, daß anstelle der variablen Umgebungstemperatur des Elektromotors 2 auch eine maximal mögliche Umgebungstemperatur des Elektromotors 2 bei der Nachbildung der Motortemperatur zugrundegelegt werden kann, wobei dann auf eine Ermittlung der tatsächlichen variablen Umgebungstemperatur des Elektromotors 2 verzichtet werden kann. Da anstelle der variablen Umgebungstemperatur des Elektromotors 2 seine maximal mögliche Umgebungstemperatur als Berechnungsgrundlage dient, ist der nachgebildete, die Motortemperatur betreffende Wert in jedem Fall höher als derjenige Wert der Motortemperatur, der sich auf Grundlage der mittels des Temperaturfühlers 7 erfaßten tatsächlichen variablen Umgebungstemperatur ergibt. Demgemäß wird durch die Berücksichtigung einer maximal zulässigen Umgebungstemperatur bzw. deren Zugrundelegung bei der Nachbildung der Motortemperatur ein zusätzlicher Sicherheitsfaktor zur Verfügung gestellt.

Desweiteren werden innerhalb der Steuereinrichtung 5 eine maximale und eine minimale thermische Zeitkonstante des Elektromotors 2 registriert. Während der Erwärmungsphasen des Elektromotors 2 bei der Hin- und Herbewegung der Massen wird zur Nachbildung der Motortemperatur die maximale thermische Zeitkonstante des Elektromotors 2 zugrundegelegt, wohingegen bei während Stillständen der hin und her bewegbaren Massen auftretenden Abkühlphasen des Elektromotors 2 die minimale thermische Zeitkonstante des Elektromotors 2 zur Nachbildung der Motortemperatur zugrundegelegt wird. Hierdurch wird sichergestellt, daß die in der Steuereinrichtung 5 nachgebildete Motortemperatur jedenfalls nicht unterhalb der tatsächlichen aktuellen Motortemperatur des Elektromotors 2 liegt.

Als Eingangsgrößen für die Ermittlung bzw. für die Nachbildung der Motortemperatur dienen:

der variable Eingangsstrom $i(t)$ des Elektromotors 2, der konstante Innenwiderstand $R_{Wickl.}$ des Elektromotors 2, die thermische Zeitkonstante $\tau_{Wickl.}$ des Elektromotors 2, der konstante thermische Wicklungswiderstand $R_{th}$ des Elektromotors 2 und die variable Umgebungstemperatur $\vartheta_A$ des Elektromotors 2.

Die Verlustleistung ergibt sich zu:

$$P_{V(t)} = R_{Wickl.} \cdot i^2(t)$$

Hieraus ergibt sich der Endwert der Übertemperatur des Elektromotors 2 zu:

$$\vartheta_{Wickl.} = \vartheta_A + P_{V(t)} \cdot R_{th}$$

$$\Delta\vartheta = P_{V(t)} \cdot R_{th}$$

Das allgemeine Tiefpaß-Verhalten wird durch die Gleichung beschrieben.

$$y(t) = y_E \, (1-e^{\frac{t}{\tau}})$$

Formel mit Anfangswert:

$$y(t) = y0 + \Delta y \, (1-e^{\frac{t}{\tau}})$$

bei t = 0     $y(t) = y0$
bei t = ∞     $y(t) = y0 + \Delta y$

Im vorliegenden Fall ergibt sich das Tiefpaß-Verhalten der Motortemperatur zu

$$\Delta\vartheta_{(t)} = P_{V(t)} \cdot R_{th} \cdot (1-e^{\frac{t}{\tau Wickl.}})$$

bzw. als Reihensumme zu

$$y_{n+1} = y_n + k \cdot (x-y_n)$$

und

$$k = 1-e^{\frac{tZykl.}{\tau Wickl.}}$$

mit $t_{Zykl.}$: Zykluszeit des Mikrocontrollers der Steuereinrichtung 5,
demgemäß zu

$$\vartheta_{Wickl.n+1} = \vartheta_{Wickl.n} + k \, [(P_V \cdot R_{th} + \vartheta_A) - \vartheta_{Wickl.n}]$$

Es sei darauf hingewiesen, daß das Tiefpaß-Verhalten nur eines einer Vielzahl möglicher mathematischer Modelle ist.

Sofern von der wie vorstehend beschrieben nachgebildeten Motortemperatur bestimmte Grenztemperaturen überschritten werden, erfolgt eine Anpassung von Stillstandzeiten, Bewegungsrichtungsumkehrzeiten, Beschleunigungsphasen, Endgeschwindigkeiten, Schleichgeschwindigkeitsstrecken oder dergleichen des vorgebbaren Bewegungsablaufs der längsgeführt hin und her bewegbaren Massen. Hierdurch kann ein sicherer Betrieb des Elektromotors 2 unterhalb der für ihn vorgegebenen Grenztemperatur gewährleistet werden.

Bei der in FIG 2 dargestellten Ausführungsform der erfindungsgemäßen Antriebseinrichtung 1 weis die Steuereinrichtung 5 eine Subeinheit 8 mit einer Zähleinrichtung 9 auf. Die Zähleinrichtung 9 hat einen Reversierzyklenzähler 10, der einen Zählwert führt, der sich erhöht, wenn die bewegbare Masse bewegt wird.

Desweiteren hat die Zähleinrichtung 9 einen Stillstandzeitensummierer 11, in dem Stillstandzeiten der bewegbaren Masse aufsummiert werden. Hierzu sind der Reversierzyklenzähler 10 und der Stillstandsummierer 11 in geeigneter Weise mit der bewegbaren Masse, die in FIG 2 nicht dargestellt ist, verbunden.

Es sei darauf hingewiesen, daß bei dieser Ausführungsform der Elektromotor 2 Stillstandzyklen erhält, wenn die bewegbare Masse stillsteht.

Der Reversierzyklenzähler 10 inkrementiert bei einer Bewegung der bewegbaren Masse und wird bei einer Reversierung der Bewegungsrichtung der bewegbaren Masse um zwei Impulse erhöht. Der Stillstandzeitensummierer wird bei einem Stillstand der bewegbaren Masse beispielsweise alle 10 ms im Controllerbetriebssystem der Steuereinrichtung 5 inkrementiert. Eine Dekrementierung des Reversierzyklenzählers 10 wird vorgenommen, sofern der Stillstandzeitensummierer 11 2 Sekunden gezählt hat, wodurch der Elektromotor 2 abkühlen kann.

Sofern der Reversierzyklenzähler 10 einen ersten Grenzwert, der für einen bestimmten Motor beispielsweise bei 500 Impulsen liegen kann, erreicht, wird die Stillstandzeit der bewegbaren Masse in dem für sie vorgebbaren Bewegungsablauf auf 1 s gesetzt, sofern sie vorher kleiner war.

Sofern der Reversierzyklenzähler 10 einen zweiten Grenzwert, der für den bereits erwähnten Motor bei ca. 1000 Impulsen liegen kann, erreicht, wird die bereits erwähnte Stillstandzeit der bewegbaren Masse auf 2 s gesetzt, sofern sie vorher kleiner war.

Wenn an die die Steuereinrichtung 5 aufweisende Antriebseinrichtung 1 eine Versorgungsspannung angelegt wird, sollte, um etwaige Vorerwärmungen des Elektromotors 2 zu berücksichtigen, der Reversierzyklenzähler 10 einen Vorgabewert, der bei dem genannten Elektromotor 2 bei ca. 400 Impulsen liegen kann, erhalten. Ein Netzreset bis zum Beginn der Bestromung des Elektromotors 2 dauert ca. 15 s.

Die gemachten Angaben hinsichtlich der Verlängerung der Stillstandzeiten sind lediglich beispielhaft, es können auch längere oder kürzere Stillstandzeiten vorgesehen werden.

## Patentansprüche

1. Antriebseinrichtung für längsgeführt hin und her bewegbare Massen, mit

   - einem Motor (2), mittels dem die Antriebsenergie für die bewegbare Masse erzeugbar ist,
   - einer Übertragungseinrichtung (4), mittels der die vom Motor (2) erzeugte Antriebsenergie auf die hin und her bewegbare Masse übertragbar ist, und
   - einer Steuereinrichtung (5), mittels der der Motor (2) so steuerbar ist, dass er entsprechend einem vorgebbaren Bewegungsablauf der bewegbaren Masse Antriebsenergie erzeugt,

   gekennzeichnet durch eine jeweils von der Steuereinrichtung (5) in Abhängigkeit von unterschiedlichen Betriebszuständen des Motors (2) im Sinne einer vorgebbaren Grenzbelastung eingestellte Stillstandszeit und/oder Bewegungsrichtungsumkehrzeit und/oder Beschleunigungsphase und/oder Endgeschwindigkeit und/oder Schleichgeschwindigkeitsstrecke des vorgebbaren Bewegungsablaufs der bewegbaren Masse.

2. Antriebseinrichtung nach Anspruch 1, bei der die Steuereinrichtung (5) eine Subeinheit (8) aufweist, mittels der der vorgebbare Bewegungsablauf der bewegbaren Masse entsprechend unterschiedlichen Betriebszuständen des Motors (2) veränderbar ist.

3. Antriebseinrichtung nach Anspruch 1 oder 2, bei der die Steuereinrichtung (5) bzw. die Subeinheit (8) die Motortemperatur als den Beriebszustand des Motors (2) kennzeichnenden Parameter erfaßt.

4. Antriebseinrichtung nach Anspruch 2 oder 3, bei der die Steuereinrichtung (5) bzw. die Subeinheit (8) den vorgebbaren Bewegungsablauf der bewegbaren Masse verändert, wenn die Motortemperätur eine fest vorgegebene Grenztemperatur überschreitet.

5. Antriebseinrichtung nach einem der Ansprüche 1 bis 4, bei der der Motor (2) ein Elektromotor ist.

6. Antriebseinrichtung nach einem der Ansprüche 3 bis 5, die einen Temperaturfühler zur Erfassung der Motortemperatur aufweist.

7. Antriebseinrichtung nach einem der Ansprüche 3 bis 5, bei der das Temperaturverhalten des Motors (2) in der Steuereinrichtung (5) nachbildbar ist.

8. Antriebseinrichtung nach Anspruch 7, deren Steuereinrichtung (5) einen Stromfühler (6) zur Erfassung des variablen Eingangsstroms des Motors (2) und einen Temperaturfühler (7) zur Erfassung der variablen Umgebungstemperatur des Motors (2) aufweist und die aktuelle Motortemperatur aufgrund des variablen Eingangsstroms des Motors (2), der variablen Umgebungstemperatur des Motors (2), des konstanten Innenwiderstands des Motors (2), der thermischen Zeitkonstante des Motors (2) und des konstanten thermischen Wicklungswiderstands des Motors (2) ermittelt.

9. Antriebseinrichtung nach Anspruch 7, deren Steuereinrichtung (5) einen Stromfühler (6) zur Erfassung des variablen Eingangsstroms des Motors (2) aufweist und die aktuelle Motortemperatur aufgrund des variablen Eingangsstroms des Motors (2), der vorgegebenen maximalen Umgebungstemperatur des Motors (2), des konstanten Innenwiderstands des Motors (2), der thermischen Zeitkonstante des Motors (2) und des konstanten thermischen Wicklungswiderstands des Motors (2) ermittelt.

10. Antriebseinrichtung nach Anspruch 8 oder 9, in deren Steuereinrichtung (5) eine maximale und eine minimale thermische Zeitkonstante des Motors (2) registriert sind, wobei die maximale bei Erwärmungs- und die minimale thermische Zeitkonstante bei Abkühlungsphasen des Motors (2) der Ermittlung der aktuellen Motortemperatur zugrundegelegt wird.

11. Antriebseinrichtung nach Anspruch 7, deren Steuereinrichtung (5) eine Zähleinrichtung (9) zur Erfassung eines Zählwerts aufweist, der ansteigt, wenn die hin und her bewegbare Masse bewegt wird und absinkt, wenn die hin und her bewegbare Masse stillsteht, wobei die Steuereinrichtung (5) den vorgebbaren Bewegungsablauf der bewegbaren Masse verändert, wenn der Zählwert einen der Grenztemperatur des Motors (2) entsprechenden Schwellenwert übersteigt.

12. Antriebseinrichtung nach Anspruch 11, bei der die Zähleinrichtung (9) einen Reversierzyklenzähler (10) aufweist, der bei einer Bewegung der bewegbaren Masse aus deren Stillstand inkrementiert und bei einer Reversierung der Bewegung der bewegbaren Masse um zwei Impulse erhöht wird.

13. Antriebseinrichtung nach Anspruch 12, deren Motor (2) während Stillstandzeiten der bewegbaren Masse stillsteht und deren Zähleinrichtung (9) einen Stillstandzeitensummierer (11) aufweist, der bei Stillstandzeiten der bewegbaren Masse je Zeitintervall, vorzugsweise je 10 ms, inkrementiert wird, wobei der Reversierzyklenzähler (10) dekrementiert wird, wenn der Stillstandzeitensummierer (11) einen vorgegebenen Zeitraum, vorzugsweise 2 s, aufsummiert hat.

14. Antriebseinrichtung nach Anspruch 12 oder 13, deren Steuereinrichtung (5) den vorgebbaren Bewegungsablauf der bewegbaren Masse verändert, vorzugsweise eine beim Bewegungsablauf auftretende Stillstandzeit um ein erstes Zeitintervall verlängert, wenn der Reversierzyklenzähler (10) einen ersten Schwellenwert übersteigt.

15. Antriebseinrichtung nach Anspruch 14, deren Steuereinrichtung (5) den vorgebbaren Bewegungsablauf der bewegbaren Masse verändert, vorzugsweise eine beim Bewegungsablauf auftretende Stillstandzeit um ein zweites Zeitintervall, das länger als das erste Zeitintervall ist, verlängert, wenn der Reversierzyklenzähler (10) einen zweiten Schwellenwert, der höher als der erste Schwellenwert liegt, übersteigt.

16. Antriebseinrichtung nach einem der Ansprüche 12 bis 15, deren Reversierzyklenzähler (10) bei einer Einschaltung des Motors (2) auf einen Grundvorgabewert eingestellt wird.

**Claims**

1. Drive device for longitudinally reciprocatable masses, comprising

   - a motor (2), by means of which the drive energy can be generated for the movable mass,
   - a transmission device (4) by means of which the drive energy generated by the motor (2) can be transmitted to the reciprocatable mass, and
   - a control device (5), by means of which the motor (2) can be controlled in such a way that it generates drive energy according to a predeterminable movement sequence of the movable mass,

   **characterized by** a standstill time and/or movement direction reversal time and/or acceleration phase and/or final velocity and/or creeping velocity section of the specifiable movement sequence of the movable mass set in each case by the control device (5) as a function of various operating states of the motor (2) in the sense of a specifiable limit loading.

2. Drive device according to Claim 1, in which the control device (5) has a subunit (8) by means of which the specifiable movement sequence of the movable mass is altered according to various operating states of the motor (2).

3. Drive device according to Claim 1 or 2, in which the control device (5) or the subunit (8) determines the motor temperature as the parameter characterizing the operating state of the motor (2).

4. Drive device according to Claim 2 or 3, in which the control device (5) or the subunit (8) alters the specifiable movement sequence of the movable mass if the motor temperature exceeds a permanently specifiable limit temperature.

5. Drive device according to any one of Claims 1 to 4, in which the motor (2) is an electric motor.

6. Drive device according to any one of Claims 3 to 5, which has a temperature sensor for determining the motor temperature.

7. Drive device according to any one of Claims 3 to 5, in which the temperature behaviour of the motor (2) can be simulated in the control device (5).

8. Drive device according to Claim 7, whose control device (5) has a current sensor (6) for determining the variable input current of the motor (2) and a temperature sensor (7) for determining the variable ambient temperature of the motor (2) and determines the actual motor temperature from the variable input current of the motor (2), the variable ambient temperature of the motor (2), the constant internal resistance of the motor (2), the thermal time constant of the motor (2) and the constant thermal winding resistance of the motor (2).

9. Drive device according to Claim 7, whose control device (5) has a current sensor (6) for determining the variable input current of the motor (2) and determines the actual motor temperature from the variable input current of the motor (2), the specified maximum ambient temperature of the motor (2), the constant internal resistance of the motor (2), the thermal time constant of the motor (2) and the constant thermal winding resistance of the motor (2).

10. Drive device according to Claim 8 or 9, in whose control device (5) a maximum and a minimum thermal time constant of the motor (2) is recorded, wherein the maximum heating time constant and the minimum thermal time constant during cooling phases of the motor (2) are taken as a basis for determining the actual motor temperature.

11. Drive device according to Claim 7, whose control device (5) has a counting device (9) for determining a count value that increases if the reciprocatable mass is moved and decreases if the reciprocatable mass is stationary, wherein the control device (5) alters the specifiable movement sequence of the movable mass if the count value exceeds a threshold value corresponding to the limit temperature of the motor (2).

12. Drive device according to Claim 11, in which the count device (9) has a reversing cycle counter (10) that increments in the event of a movement of the movable mass from its standstill and is increased by two pulses in the event of reversing of the movement of the movable mass.

13. Drive device according to Claim 12, whose motor is stationary during standstill times of the movable mass and whose counting device (9) has a standstill time summing device (11) that is incremented for every time interval, preferably every 10 ms, during standstill times of the movable mass, wherein the reversing cycle counter (10) is decremented if the standstill time summing device (11) has summed a specified time period, preferably 2 s.

14. Drive device according to Claim 12 or 13, whose control device (5) alters the specifiable movement sequence of the movable mass, preferably prolongs a standstill time occurring during the movement sequence by a first time interval if the reversing cycle counter (10) exceeds a first threshold value.

15. Drive device according to Claim 14, whose control device (5) alters the specifiable movement sequence of the movable mass, preferably prolongs a standstill time occurring during the movement sequence by a second time interval that is longer than the first time interval if the reversing cycle counter (10) exceeds a second threshold value that is higher than the first threshold value.

16. Drive device according to any one of Claims 12 to 15, whose reversing cycle counter (10) is set to a specified default value on switching on the motor (2).

## Revendications

1. Dispositif d'entraînement pour masses à mouvement aller et retour guidé longitudinalement, comportant

   - un moteur (2), permettant de produire l'énergie d'entraînement pour la masse mobile,
   - un équipement (4) de transmission, permettant de transmettre l'énergie d'entraînement produite par le moteur (2) à la masse à mouvement aller et retour, et
   - un équipement (5) de commande, permettant de commander le moteur (2) de façon qu'il produise de l'énergie d'entraînement en fonction d'un déroulement prescriptible du mouvement de la masse mobile,

**caractérisé par** un temps d'immobilisation et/ou un temps d'inversion de direction de déplacement et/ou une phase d'accélération et/ou une vitesse finale et/ou un parcours de vitesse lente du déroulement prescriptible du mouvement de la masse mobile, respectivement réglés par l'équipement (5) de commande en fonction de différents états de fonctionnement du moteur (2), au sens d'une charge limite prescriptible.

2. Dispositif d'entraînement suivant la revendication 1, suivant lequel l'équipement (5) de commande comporte un sous-ensemble (8) permettant de modifier le déroulement prescriptible du mouvement de la masse mobile en fonction de différents états de fonctionnement du moteur (2).

3. Dispositif d'entraînement suivant la revendication 1 ou 2, suivant lequel l'équipement (5) de commande ou le sous-ensemble (8) enregistre la température du moteur comme paramètre caractérisant l'état de fonctionnement du moteur (2).

4. Dispositif d'entraînement suivant la revendication 2 ou 3, suivant lequel l'équipement (5) de commande ou le sous-ensemble (8) modifie le déroulement prescriptible du mouvement de la masse mobile si la température du moteur dépasse une température limite fixement prescrite.

5. Dispositif d'entraînement suivant l'une des revendications 1 à 4, suivant lequel le moteur (2) est un moteur électrique.

6. Dispositif d'entraînement suivant l'une des revendications 3 à 5, qui comporte un capteur de température pour enregistrer la température du moteur.

7. Dispositif d'entraînement suivant l'une des revendications 3 à 5, suivant lequel le comportement de température du moteur (2) peut être reproduit dans l'équipement (5) de commande.

8. Dispositif d'entraînement suivant la revendication 7, dont l'équipement (5) de commande comporte un détecteur (6) de courant pour enregistrer le courant d'entrée variable du moteur (2) et un capteur (7) de température pour enregistrer la température ambiante variable du moteur (2), et détermine la température actuelle du moteur sur la base du courant d'entrée variable du moteur (2), de la température ambiante variable du moteur (2), de la résistance interne constante du moteur (2), de la constante de temps thermique du moteur (2) et de la résistance thermique constante du bobinage du moteur (2).

9. Dispositif d'entraînement suivant la revendication 7, dont l'équipement (5) de commande comporte un détecteur (6) de courant pour enregistrer le courant d'entrée variable du moteur (2) et détermine la température actuelle du moteur sur la base du courant d'entrée variable du moteur (2), de la température ambiante maximale prescrite du moteur (2), de la résistance interne constante du moteur (2), de la constante de temps thermique du moteur (2) et de la résistance thermique constante du bobinage du moteur (2).

10. Dispositif d'entraînement suivant la revendication 8 ou 9, dans l'équipement (5) de commande duquel sont enregistrées des constantes de temps thermiques maximale et minimale du moteur (2), la constante de temps thermique maximale étant prise comme base pour déterminer la température actuelle du moteur lors de phases d'échauffement du moteur (2), et la constante de temps thermique minimale lors de phases de refroidissement.

11. Dispositif d'entraînement suivant la revendication 7, dont l'équipement (5) de commande comporte un équipement (9) de comptage pour enregistrer une valeur de comptage qui augmente lorsque la masse à mouvement aller et retour est déplacée et diminue lorsque la masse à mouvement aller et retour est immobile, l'équipement (5) de commande modifiant le déroulement prescriptible du mouvement de la masse mobile si la valeur de comptage dépasse une valeur de seuil correspondant à la température limite du moteur (2).

12. Dispositif d'entraînement suivant la revendication 11, suivant lequel l'équipement (9) de comptage comporte un compteur (10) de cycles réversibles, qui est incrémenté lors d'un mouvement de la masse mobile à partir de son immobilisation et est augmenté de deux impulsions lors d'une inversion du mouvement de la masse mobile.

13. Dispositif d'entraînement suivant la revendication 12, dont le moteur (2) est arrêté pendant les phases d'immobilisation de la masse mobile et dont l'équipement (9) de comptage comporte un totalisateur (11) de temps d'immobilisation qui est incrémenté à chaque intervalle de temps, de préférence toutes les 10 ms, pendant les temps d'immobilisation de la masse mobile, le compteur (10) de cycles réversibles étant décrémenté lorsque le totalisateur (11) de temps d'immobilisation a totalisé une durée prescrite, de préférence 2 s.

14. Dispositif d'entraînement suivant la revendication 12 ou 13, dont l'équipement (5) de commande modifie le déroulement prescriptible du mouvement de la masse mobile, de préférence prolonge un temps d'immobilisation, apparaissant lors du déroulement du mouvement, d'un premier intervalle de temps si le compteur (10) de cycles réversibles dépasse une première valeur de seuil.

**15.** Dispositif d'entraînement suivant la revendication 14, dont l'équipement (5) de commande modifie le déroulement prescriptible du mouvement de la masse mobile, de préférence prolonge un temps d'immobilisation, apparaissant lors du déroulement du mouvement, d'un deuxième intervalle de temps, qui est plus long que le premier intervalle de temps, si le compteur (10) de cycles réversibles dépasse une deuxième valeur de seuil qui est supérieure à la première valeur de seuil.

**16.** Dispositif d'entraînement suivant l'une des revendications 12 à 15, dont le compteur (10) de cycles réversibles est réglé à une valeur prescrite de base lors de la mise en marche du moteur (2).

Fig. 1

EP 0 837 536 B1

Fig. 2